Europäisches Patentamt

European Patent Office

Office européen des brevets

(19)

(11) **EP 1 254 006 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: 01902230.0

(22) Anmeldetag: **09.02.2001**

(51) Int Cl.⁷: **B29C 45/56**

(86) Internationale Anmeldenummer:
**PCT/CH01/00090**

(87) Internationale Veröffentlichungsnummer:
**WO 01/058662 (16.08.2001 Gazette 2001/33)**

(54) **VERFAHREN ZUR STEUERUNG/REGELUNG DES PRÄGEABLAUFES SOWIE ANTRIEBS- UND STEUEREINRICHTUNG FÜR SPRITZGIESSMASCHINEN**

METHOD OF CONTROLLING/REGULATING AN EMBOSSING PROCEDURE AND DRIVE AND CONTROL DEVICE FOR INJECTION MOLDING MACHINES

PROCEDE DE COMMANDE/REGULATION DU PROCESSUS D'ESTAMPAGE AINSI QUE DISPOSITIF D'ENTRAINEMENT ET DE COMMANDE D'OUTILS DE MOULAGE PAR INJECTION

(84) Benannte Vertragsstaaten:
**AT BE CH CY DE DK ES FI FR GB GR IE IT LI LU MC NL PT SE TR**

(30) Priorität: **09.02.2000 WOPCT/CH00/00069**
**22.12.2000 CH 253200**

(43) Veröffentlichungstag der Anmeldung:
**06.11.2002 Patentblatt 2002/45**

(73) Patentinhaber: **Netstal-Maschinen AG**
**8752 Näfels (CH)**

(72) Erfinder: **WEINMANN, Robert**
**CH-8872 Weesen (CH)**

(74) Vertreter: **Ackermann, Ernst, Dipl.-Ing. HTL**
**Patentanwalt**
**Egghalden**
**9231 Egg-Flawil (CH)**

(56) Entgegenhaltungen:
**EP-A- 0 359 830          EP-A- 0 426 129**
**AT-B- 365 119          GB-A- 2 193 681**

• **PATENT ABSTRACTS OF JAPAN vol. 14, no. 315 (M-995), 6. Juli 1990 (1990-07-06) & JP 02 106313 A (JAPAN STEEL WORKS LTD:THE), 18. April 1990 (1990-04-18)**

**Beschreibung**

**Technisches Gebiet**

Die Erfindung betrifft ein Verfahren zur Steuerung/Regelung des Prägeablaufes für die Herstellung von Präzisionsteilen, insbesondere von flachen optischen Datenträgern, mit einer Spritzgiessmaschine mit zwei Formhälften, einer angetriebenen Formhälfte sowie einer Gegenformhälfte, wobei die angetriebene Formhälfte mittels eines elektromechanischen oder hydraulischen Pägeantriebes bewegt und der Kraftschluss zwischen der angetriebenen Formhälfte und der Gegenformhälfte bei der Grundeinstellung und dem ganzen Spritzzyklus über Verbindungsmittel der Spritzgiessmaschine hergestellt wird, welche sich in Funktion des Prägekraftverlaufes dehnen und das Spaltmass zwischen der angetriebenen Formhälfte und der Gegenformhälfte entsprechend beeinflussen. Die Erfindung betrifft ferner eine Antriebs- und Steuer/Regeleinrichtung für die Formschlussseite einer elektromechanisch und/oder hydraulisch angetriebenen Spritzgiessmaschine mit einer angetriebenen Formhälfte und einer Gegenformhälfte mit steuer-/regelbarem Prägeablauf für die Herstellung von Präzisionsteilen insbesondere von flachen Datenträgern wobei der Kraftschluss zwischen der angetriebenen Formhälfte und der Gegenformhälfte über dehnbare Verbindungsmittel der Spritzgiessmaschine herstellbar ist, wobei über die Dehnbarkeit der Verbindungsmittel das Spaltmass (S) zwischen der angetriebenen Formhälfte und der Gegenformhälfte beeinflussbar ist.

**Stand der Technik**

Klassische Spritzgiessmaschinen weisen grundsätzlich zwei Formhälften auf. Die eine bewegliche, erste Formhälfte wird mittels einem Antriebssystem gegenüber einer Antriebsträgerplatte für das Formschliessen sowie das Formöffnen bewegt. Die Formbewegung kann z.B. auf Grund einer Weg-, einer Druck- und/oder einer Geschwindigkertsfunktion gesteuert werden. Die GB-PS 1 226 118 schlägt vor, den Geschwindigkeitsablauf der Formbewegung für bestimmte Abschnitte eines Giesszyklusses nach vorgegebenen Programmen zu steuern. Bei der Verwendung von Hydraulikzylindern als Antriebssystem lässt sich die Geschwindigkeit der beweglichen Formhälfte über die Oelmenge steuern und/oder regeln. Mit zusätzlichen Temperaturpararnetern kann so mit hoher Genauigkeit ein optimaler Geschwindigkeitsverlauf der bewegbaren Formhälfte sichergestellt werden. Beim klassischen Spritzgiessen werden die beiden Formhälften mit einer derart grossen Schliesskraft zusammengepresst, dass es selbst unter den höchsten Drücken der Schmelze zu keinem Öffnen der Formen kommen kann. Typisch beim klassischen Spritzgiessen ist eine länger dauernde Nachdruckphase nach Abschluss der vollständigen Formfüllung. Die Nachdruckphase wird durch die Einspritzschnecke über den Anguss im Sinne eines hydraulischen Druckes aufrechterhalten. Für die Gattung der Spritzgiessmaschinen für die Herstellung von flachen Datenträgern steht im Zentrum das Prägen und Ausprägen der Dateninformation. Besonders für die Produktion von optischen Datenträgem oder CD's werden die folgenden besonderen Phasen des Herstellzyklusses unterschieden:

- Formfüllung
- Prägen und Ausprägung der Dateninformation
- Nachdruck in der Abkühlphase zur Erhaltung der Oberflächenstruktur, auch beim Schwinden des Spritzgiessteiles.

Beim klassischen Spritzgiessen ist mit der exakten Kavität in der Spritzgiessform das fertige Spritzgiessteil definitiv festgelegt. Dagegen wird bei Spritzgiessmaschinen für das Prägen die Endform des Produktes erst durch Zusammenstossen der beiden Formhälften nach anfänglich nur teilweiser Formhohlraumfüllung erreicht. Die Prägephase ist bei der Herstellung von flachen Datenträgern die Schlüsselphase. Typisch bei der Prägephase ist ein vollflächig wirksamer Nachdruck durch Anwendung eines Kompressionsdruckes direkt über die Formhälften, wofür eine angetriebene Formhälfte gegen die Gegenformhälfte verschoben wird. Unter dem Begriff Nachdruck wird eine flächig aufgebrachte Kraft durch die eine Formhälfte verstanden. Der Nachdruck ist der sinngemässe Ersatz für das über die Einspritzdüse im klassischen Spritzgiessen eher punktuell in die Form einwirkende "hydraulische" Nachdrücken mittels Druckübertragung über die flüssige Schmelze. Die angetriebene Formhälfte wird für die Herstellung von flachen Datenträgern vor dem Einspritzen an eine vorbestimmte Position gefahren und etwa für die Zeitdauer des Einspritzens in der Position gehalten. Danach wird unter Anwendung des Kompressionsdruckes die entsprechende Platine bzw. die angetriebene erste Formhälfte an die zweite Gegenformhälfte gestossen mit der Aufbringung des Prägedruckes.

Ein Verfahren zur schrittweisen Formung von Linsen und flachen Datenträgern aus plastifiziertem thermoplastischem Harz, unter Anwendung einer Spritzgiessmaschine, wird in der EP 0 244 783 vorgeschlagen:

• Es wird als erster Schritt ein vorvergrösserter, geschlossener Formhohlraum gebildet, der zur Aufnahme des plastifizierten Harzes geeignet ist, ohne dass es darin zu einem nennenswerten Gegendruck kommt und der ein Volumen aufweist, das grösser ist als das vom plastifizierten, zur Einspritzung vorgesehene Harz unter Normaldruck maximal eingenommene Volumen.

- In den vorvergrösserten Formhohlraum wird danach ein Volumen des plastifizierten Harzes eingespritzt, das ein wenig grösser ist als das Volumen des zu formenden Gegenstandes.
- Von der Maschine wird eine kontrollierte Kraft so angewandt, dass das Volumen des Formhohlraums reduziert wird, wodurch das darin befindliche Harz neu verteilt wird und
- die angewandte Kraft danach beibehalten wird, zumindest bis zum Erstarren des Harzes, wodurch dieses im Formhohlraum komprimiert wird.
- Der Kompressionsschritt wird jedoch schon eingeleitet, bevor der Einspritzschritt abgeschlossen ist.

Die jüngere US-PS 4 917 840 schlägt für die Herstellung von flachen Präzisionsteilen wie "Recording Disk" die folgenden drei Schritte vor:

- dass eine geschwindigkeitsgesteuerte Bewegung der ersten Platine erst nach dem Einspritzen des Kunststoffes bei einer bestimmten Spaltgrösse erfolgt, und
- dass ein Geschwindigkeitsprogramm, bezogen auf aufeinanderfolgende Spaltmasse der ersten Werkzeughälfte relativ zu der zweiten Werkzeughälfte,
- und/oder bezogen auf aufeinanderfolgende Zeitintervalle der Bewegung der ersten Werkzeughälfte definiert ist.

Es wird somit nacheinander: erstens eine exakt vorbestimmte Spaltgrösse verlangt bzw. vorgegeben, zweitens der flüssige Kunststoff dosiert eingespritzt und drittens mit einem vorgegebenen Geschwindigkeitsprogramm die Prägung vorgenommen. Die Teilschritte für den Ablauf des Geschwindigkeitsprogrammes können entweder nach bestimmten Spaltpositionen oder Zeitintervallen erfolgen, wobei vorgesehen ist, zusätzlich einzelne Abschnitte, besonders am Ende des Prägeschrittes, druckgesteuert sicherzustellen. Voraussetzung dieser Vorschläge ist eine exakte Spaltmessung. Die Qualität der ganzen Steuerung/ Regelung ist deshalb abhängig von der Genauigkeit der momentnen Spaltmessung bzw. einer entsprechenden Auswertung in Echtzeit. Eine Spaltmessung zwischen den Matrizen wäre aufwendig, so dass in der Praxis ein Ersatzmass, z.B. eine Abstandsmessung zwischen den Formträgerplatten, vorgenommen wird, wie in der US-PS 4 917 840 vorgeschlagen wird. Eine Prägeregelung aufbauend auf dem fortlaufend gemessenen Spaltmass zwischen den beiden Formhälften beinhaltet nur die Phase der Verkleinerung des Spaltes bzw. die Phase der Materialverteilung, nicht aber die Phase des Kraftaufbaues bei der Ausprägung. Diese Lösung bedingt deshalb eine zusätzliche Kraftmessung "realtime" zur exakten Steuerung/Regelung des Prägeprozesses. Die geschwindigkeitsge-steuerte Bewegung kann gemäss Vorschlag der jüngeren Druckschrift deshalb erst nach Anfahren einer exakt definierten Stelle bzw. an einem definierten Spalt beginnen. Die Lösung gemäss US-PS 4 917 840 stellt hohe Ansprüche an die Sensortechnik mit den damit verbundenen Fehlermöglichkeiten.

## Darstellung der Erfindung

Der Erfindung wurde nun die Aufgabe zugrunde gelegt, ein Verfahren sowie eine Vorrichtung mit einer Prozesskontrolle für den Prägeablauf zu entwickeln, welche eine hohe Genauigkeit und Reproduzierbarkeit des Endproduktes sicherstellen und mit möglichst wenig Sensorik betreibbar sind.

Das erfindungsgemässe Verfahren ist dadurch gekennzeichnet, dass die Steuerung/Regelung während dem Prägeablauf unter Umgehung einer laufenden Messung des Spaltmasses zwischen den beiden Formhälften, auf der Basis der Wegfunktion der angetriebenen Formhälfte programmgesteuert/geregelt erfolgt.

Die erfindungsgemässe Antriebs- und Steuereinrichtung ist dadurch gekennzeichnet, dass ein Prägeantrieb sowie eine Programmsteuerung/Regelung vorgesehen ist, Ober welche der Prägeablauf unter Umgehung einer laufenden Messung des Spaltmasses (S) zwischen den beiden Formhälften aufgrund der Wegfunktion der angetriebenen Formhälfte regel-/steuerbar ist.

Vom Erfinder ist erkannt worden, dass der Zeitpunkt des Prägebeginnes nicht primär für die Qualität des fertigen Spritzgiessteiles entscheidend ist. Weit wichtiger für die Produkteigenschaften ist die Art des Prägeablaufes mit optimaler Massenverteilung in der Kavität und der anschliessende Kompressionsaufbau. In beiden genannten Lösungen des Standes der Technik für die Herstellung von flachen Präzisionsteilen wird versucht, durch das abschnittsweise Miteinbeziehen der angewendeten Kraft bzw. des daraus resultierenden Druckes in die Steuerung/Regelung der Prägephase zu grosse Abweichungen von den Zielgrössen zu vermeiden. Die EP O 244 783 will zudem die für das Prägen angewendete Kraft wenigstens bis zum Erstarren des Harzes beibehalten.

Bei einer konkreten Spritzgiessmaschine werden die Kompressionskräfte über Rahmenträger bzw. Säulen gehalten und entsprechend ein Kraftschluss hergestellt. Bei den enormen Kräften, die für das Prägen notwendig sind, ergibt sich eine Maschinendehnung in der Grössenordnung von 0,5 mm bis zu 1 mm und mehr. Die Dicke von Datenträgern liegt beispielsweise bei 0,4 bis 0,8 mm. Bei Anwendung der höchsten Kräfte während dem Prägeschritt auf die bewegliche erste Formhälfte bzw. auf die angetriebene Platte flieht die zweite Formhälfte mit der Gegenplatte um das Mass der Maschinendehnung, das grösser sein kann als die Dicke des Datenträgers.

Die neue Erfindung schlägt nun vor, die Steuerung/Regelung für den Prägeablauf zu reduzieren:

1. auf die Basis der Wegfunktion der angetriebenen Platte bzw. der angetriebenen Formhälfte und

2. auf eine Programmsteuerung/Regelung.

Spritzgiessmaschinen haben Mittel für die Grundeinstellung der Maschine. Es wird dazu auf die DE 36 31 164 verwiesen. Nach jedem Formwechsel wird vor Beginn des ersten Spritzzyklusses die Maschine voreingestellt. Auf Grund der maximalen Prägekraft wird die Grundschliesskraft festgelegt. Beispielsweise werden über einen Säulenmutterantrieb die beweglichen Teile so positioniert, dass der Druck auf das Werkzeug bei der Grundeinstellung bei geschlossenem Werkzeug (ohne Spritzling) eine Schliesskraft leicht über der maximal für das Prägen erforderlichen Kraft erreicht. Im Falle eines Kniehebelantriebes sind diese bei geschlossenem Werkzeug vollständig gestreckt. Der Öffnungsweg kann von Fall zu Fall eingestellt werden. Damit sind aber Anfang und Ende der Bewegung der angetriebenen Platte exakt definierbar.

Die neue Erfindung umgeht für die Steuerung/Regelung des Prägeablaufes auf elegante Weise das Problem der laufenden Messung der Maschinendehnung bzw. des Spaltmasses zwischen den Formhälften. Beide sind abhängig von der sich laufend ändernden Prägekraft. Die neue Erfindung erlaubt ferner, während der Phase des Prägeablaufes im Hinblick auf die Regeltechnik ebenfalls auf die entsprechende Sensor- und Auswerttechnik für den Prägekraftverlauf zu verzichten. Wie nachfolgend noch ausgeführt wird, lassen sich die wichtigsten Abweichungen im Extremfall von Zyklus zu Zyklus über eine zentrale Säulenmutterregelung korrigieren und werden damit über die Programmsteuerung/Regelung berücksichtigt. Dies reduziert als grossen Vorteil die Aufwendungen für teure "realtime" Sensortechnik während der Prägephase. Auf die entsprechend komplexere Regeltechnik kann verzichtet werden. Die neue Lösung gestattet die wichtigsten sich ändernden Parameter, insbesondere den Temperaturfaktor, welche Einfluss auf die Abstandsverhältnisse haben, zyklisch über den Programmablauf zu berücksichtigen. Im Hinblick auf die Kompression sind dies zuerst alle möglichen Deformationen, mit Einschluss der Säulendehnung. Die Wegfunktion schliesst die speziellen, konkreten Antriebsmittel ein. Anfang und Ende des Prägeprogrammablaufes werden gemäss der neuen Lösung bereits in der Grundeinstellung der Maschine definiert. Damit kann für den normalen Spritzbetrieb in der heikelsten Phase der Prägung auf spezielle "reatime" Sensor- und Regeltechnik verzichtet werden. Die erlaubt, über wählbare Programme den ganzen Prägeablauf auf der Basis der Wegfunktion des elektromechanischen Antriebes zu kontrollieren.

Die Erfindung erlaubt eine ganze Anzahl besonders vorteilhafter Ausgestaltungen, wofür auf die Ansprüche 2 bis 12 sowie 14 bis 21 Bezug genommen wird. Als zur Zeit beste Lösung kann die neue Lösung bei der Gattung von Spritzgiessmaschinen angewendet werden, wie sie in der WO00/47389 der Anmelderin beschrieben ist. Es handelt sich um eine Maschine mit einem sogenannten Lang- und einem Kurzhub. Der Kurzhub genügt, um mit Greifem die CD's automatisch den geöffneten Formen zu entnehmen. Der Langhub dient vor allem dem Matrizewechsel.

Vom Markt werden CD's mit einer Vielfalt von unterschiedlichen Grundaufbauten und eine unbeschränkte Anzahl Variationen in Bezug auf die speziell aufzuprägenden Daten verlangt. Die einzelnen Serien sind in der Regel klein, können aber auch in die Tausende oder Zehntausende gehen. Der unüblich rasche Wechsel der Formeinsätze bedingt eine spezielle Gattung von Spritzgiessmaschinen. Unter Umständen ist eine Form bzw. die entsprechende Matrize nur eine viertel oder eine halbe Stunde in der Maschine und muss durch eine andere ersetzt werden. Die Wirtschaftlichkeit liegt neben einer fehlerfreien Produktion vor allem in zwei fast gleichgewichtigen Faktoren:

1. Zykluszeit für eine CD inkl. die dafür erforderliche Trockenlaufzeit

2. Umrüstzeit für den Einsatz der Matrize (Stamper) in die Grundform zum Wechseln der Information

Die Umrüstzeit geht wegen den kleinen Serien stark in die Produktivität ein, da die Matrizen pro Stunde oft mehrmals gewechselt werden müssen. Matrizen sind aus Distanz betrachtet eine Art dünne CD-Platten, welche als Negativform das Abbild der Oberflächenstruktur der CD aufweisen. Gewechselt wird somit nur die Matrizenplatte, welche in die Form einlegbar und z.B. in einer halben Minute wieder herausnehmbar ist.

Die Wegfunktion wird sowohl in der ersten Phase der Verkleinerung des Prägespaltes bzw, der Materialverteilung wie in der zweiten Phase der Erhöhung der Prägekraft gleicherweise als Profilsteuerung/-regelung zu Grunde gelegt. Bevorzugt erfolgt sowohl die Verkleinerung des Prägespaltes wie auch die Erhöhung der Prägekraft geschwindigkeitsgeregelt, wobei die Phase der Verkleinerung des Prägespaltes und die nachfolgende Phase der Erhöhung der Kraft mittels einer Geschwindigkeitssteuerung, vorteilhafterweise ineinanderfliessend, durchgeführt wird. Das Prägeende wird durch eine vorwählbare Wegposition des Prägeantriebes bzw. der angetriebenen Formhälfte festgelegt, welche einer voreinstellbaren Schliesskraft und einer optimalen Kraft in der Prägeendphase entspricht. Die Voreinstellung der Maschine bzw. die entsprechende Korrekturregelung durch die zentrale Säulenmutterverstellung wird dabei so gewählt, dass während der Produktion, sowohl in der Prägephase wie auch beim anschliessenden Nachdruck, alle Kräfte über die Masse des Spritzgiessteils aufgenommen und jeder metallische Kontakt der Form- bzw. Werkzeughälften vermieden wird.

Gemäss einer weiteren, sehr vorteilhaften Ausgestaltung der neuen Lösung erfolgt der Nachdruckverlauf programmgesteuert/-geregelt als Profilsteuerung/Regelung der Position bzw. des Weges, entweder über der Zeitbasis, der Kraft über der Zeitbasis oder des Drehmomentes des Antriebes über der Zeitbasis, derart, dass die Oberflächenstruktur bestmöglich erhalten und dass der wirksame Nachdruck während der Kühlphase so reduziert wird, dass der innere Spannungszustand der Spritzgiessteile und damit der Brechungsindex möglichst nicht negativ beeinflusst wird. Für den Nachdruckverlauf erfolgt die Steuerung/Regelung auf der Zeitbasis, dies, um der zeitlichen Funktion der Abkühlung Rechnung zu tragen und damit die im fertigen Teil benötigte innere Struktur beim Abkühlen sicherzustellen. Je nach Anwendung kann die Profilsteuerung über den Weg der Kraft, des Drehmomentes des Antriebsmotores oder einer Kombination erfolgen.

Vorgängig einer Produktionscharge, insbesondere nach jedem Werkzeugwechsel, wird eine Grundeinstellung der Maschine vorgenommen oder diese während jedern Spritzzyklus überwacht und gegebenenfalls zyklisch korrigiert. Entsprechend der maximalen Prägekraft im Prägeablauf wird auf an sich bekannte Weise die Grundschliesskraft sowie die optimale End- und Anfangsstellung des Prägeantriebes ohne Produkt und mit vollständig geschlossenem Werkzeug festgelegt. Vorzugsweise wird bei jedem Produktionszyklus der Spitzenwert der aufgetretenen Ist-Prägekraft erfasst und entsprechende Längenänderungen der Verbindungsmittel, bedingt durch thermische Einflüsse, vorzugsweise durch einen Vergleich des Mittelwertes mehrerer Messungen mit der Sollprägekraft festgestellt und durch Korrektur einer Säulenmuttereinstellung kompensiert. Die Grundeinstellung für eine optimale Endstellung und der Langhub werden über eine Säulenmutterverstellung, vorzugsweise elektromechanisch bzw. elektromotorisch, vorgenommen. Die Wegerfassung für den Lang- bzw. Inspekthub kann durch eine Wegerfassung in einem Servomotor erfolgen, wobei die in der Schliesskraftregelung ermittelte Position der Produktionsstellung in einem nachfolgenden Zyklus wieder exakt anfahrbar und als reproduzierbare Position der Steuerung/ Regelung bzw. der Koordination der verschiedenen Achsen der Spritzgiessmaschine zu Grunde legbar ist. Ein nicht unwichtiger Punkt ist, dass das Spiel zu den beweglichen Teilen, insbesondere des Säulenmutterantriebes, durch mechanische oder pneumatische Federmittel wirksam durch Anpressen in Prägekraftrichtung aufgehoben wird. Im Falle eines hydraulischen Antriebes wird die Wegerfassung durch entsprechende Wegsensoren sichergestellt.

Gemäss einer weiteren, sehr vorteilhaften Ausgestaltung erfolgt der Kurzhub und damit auch der Prägeantrieb elektromechanisch über einen Servomotor, mit Positionserkennung im Servomotor, auf dessen Basis die Wegfunktion des elektromechanischen Antriebes errechenbar ist. Der Kurzhub oder Prägeantrieb kann einen Kniehebel-, einen Zahnstangen-, einen Exzenter- oder einen Kurbelantrieb aufweisen, der mit der angetriebenen Formhälfte verbunden ist.

Ist der Prägeantrieb als Exzenter- oder Kurbelantrieb ausgebildet, so wird der Exzenter- bzw. Kurbelantrieb derart ausgelegt, dass der Prägehub für die maximale Kompression in Totpunktnähe nutzbar ist und die Wegfunktion aus der Kurbel- oder Exzenterstellung ($\varphi$) abgeleitet und entsprechend der Positionserkennung aus der Regelung des Servomotores ermittelbar ist.

Bevorzugt wird die Antriebsträgerplatte fest mit dem Maschinenständer verbunden und die angetriebene Formhälfte über den Prägeantrieb relativ zur Antriebsträgerplatte bewegbar geführt, derart, dass die Reaktionskräfte aus der Beschleunigung und Abbremsung der Formbewegungen vom Maschinenständer aufgenommen werden und deshalb die Genauigkeit, insbesondere der Prägestartposition, nicht negativ beeinflussen.

Vorteilhafterweise weist die Antriebs- und Steuer-/Regeleinrichtung einen zentralen Säulenmutterantrieb auf, wobei eine Gegenplatte mit der Gegenformhälfte gegenüber dem Maschinenständer verschiebbar gelagert und die Grundeinstellung der Maschine über den Säulenantrieb durchführbar ist. Dabei wird der Säulenmutterantrieb als Stellglied der Schliesskraftgrundeinstellung und der Schliesskraftregelung zusammen mit einem Kraftsensor als Istwertgeber zur Erfassung der Schliesskraft und einer Regelvorrichtung ausgebildet. Der Prägeantrieb und der zentrale Säulenmutterantrieb weisen wenigstens je einen unabhängig steuerbaren Antriebsmotor, vorzugsweise als Servomotor ausgebildet, auf, wobei die Steuer-/Regelvorrichtung mit Datenbussen mit den erforderlichen Speichern für auswählbare Rezepte bzw. Programme verbindbar ist.

## Kurze Beschreibung der Erfindung

Die neue Erfindung wird nun an Hand einiger Ausführungsbeispiele mit weiteren Einzelheiten erläutert. Es zeigen:

| | |
|---|---|
| die Figur 1 | eine Spritzgiessmaschine des Standes der Technik für die Herstellung von z.B. CD's mit hydraulischem Antrieb; |
| die Figur 1 | schematisch in vergrössertem Massstab die hydraulischen Antriebe für den Kurz- sowie den Langhub, entsprechend der Figur 1 a, mit einer Wegerfassung für die Prägephase gemäss |

neuer Lösung;

die Figur 3 ein Ausführungsbeispiel gemäss der neuen Lösung mit Kurbelantrieb sowie Säulenmutterantrieb mit elektromechanischen Antrieben;

die Figur 4a die Spielaufhebung für den Säulenmutterantrieb einer Lösung gemäss Figur 3;

die Figur 4b die Lagerung einer Säule als Ausschnittsvergrösserung der Figur 4a;

die Figur 5a drei Positionen der Exzenter- bzw. Kurbelbewegung für den Kurzhub;

die Figur 5b den theoretischen Kraftverlauf am Ende der Schliessbewegung beim Aufbau der Prägekraft;

die Figur 6 schematisch ein Schnitt einer Drei-Säulenmaschine, mit den Antrieben für den Kurz- und den Langhub;

die Figuren 7a und 7b Sollwertverläufe: die Figur 7a für das Formschliessen, die Figur 7b für das Prägen;

die Figuren 8a bis 8d die verschiedenen Abläufe der Formbewegung, dargestellt als Funktion über der Zeit: die Figur 8a die Formlage, Figur 8b die Prägekraft, Figur 8c den Spalt S und Figur 8d die Schnek-kenbewegung;

die Figur 9 eine Ansicht einer bevorzugten Ausgestaltung einer elektrisch angetriebenen Spritzgiessmaschine für die Herstellung von Präzisionsteilen;

die Figur 10 eine Ansicht von oben, gemäss Pfeil VI der Figur 10;

die Figur 11 einen Schnitt IX - IX der Figur 10.

## Wege und Ausführung der Erfindung

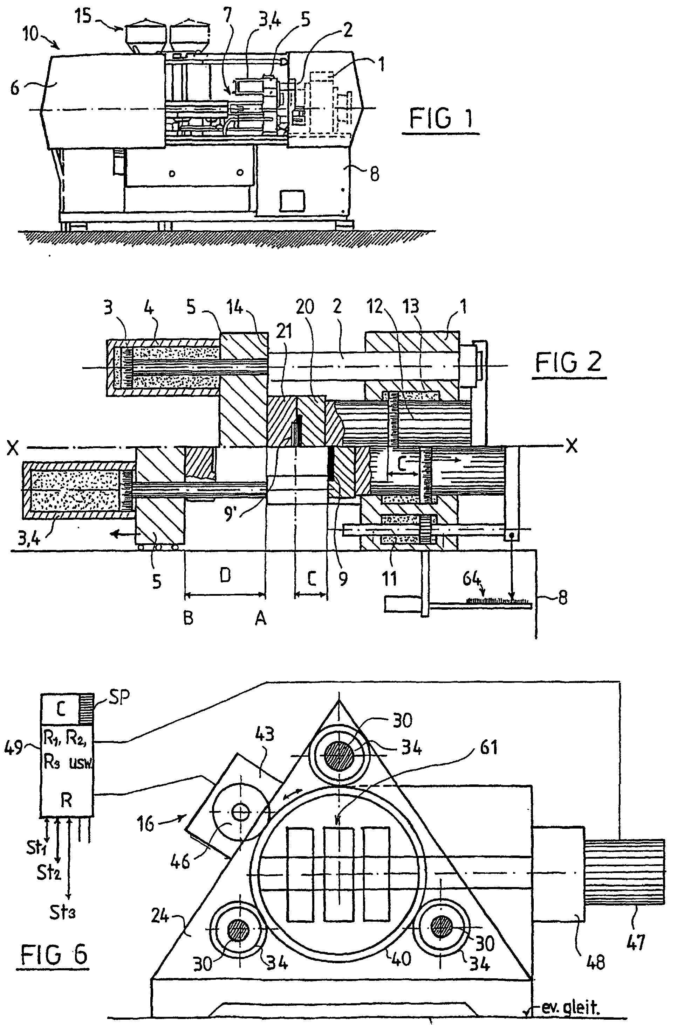

Mit der bekannten Lösung gemäss Figur 1 wird im Stand der Technik eine CD in 3,7 Sekunden oder weniger hergestellt. Es handelt sich um ein Maschinenkonzept der Anmelderin. Es ist eine vollhydraulische Maschine 10 mit sehr guten Eigenschaften in Bezug auf die Maschinenstabilität. Das Charakteristische der Maschine 10 ist die Kombination eines Kurz- sowie eines Langhubes. Der Kurzhub (C in Figur 2) liegt bei 70 bis 80 mm. Die Schliesskraft beträgt etwa 600 kN. Der Wartungshub (D) liegt bei etwa total 300 mm. Eine Formplatte 1 ist fest mit einem Maschinenständer 8 bzw.

Maschinenbett verbunden. Die Zugstangen 2 sind verschraubt mit der Formplatte 1, wobei am anderen Ende der Zugstangen 2 ein Kolbenkopf 3 sich innerhalb eines Zylinders 4 befindet. Die Formplatte 5 ist oberhalb der Achse X - X in einer Produktionsstellung gezeichnet, wobei der Kolbenkopf 3 dauernd gegen eine Schulter 14 der Zugstangen 2 drückt. Mit relativ kleinen Kräften bewegt sich über zwei Hilfszylinder 11 ein Schliesskolben 12 vor- und rückwärts über den ganzen Kurzhub (C). Nur für das Aufbringen der grossen Schliesskraft wird der entsprechende Oeldruck in einer Kolbenkammer 13 aufgebracht. Für den Wechsel der Matrize 9, 9' in der Form wird der Kolben 3 von Position A zu B bewegt, um genügend Platz zu schaffen für einen Formwechsel. Mit der gezeigten Lösung wird für das Aufbringen der Schliesskraft nur eine kleine Oelmenge benötigt. Für einen Matrizenwechsel in den Formhälften 20, 21 werden die drei Zylinder an den Zugstangen 2 angesteuert, und die Formplatte 5 öffnet sich um den Lang- bzw. Wartungshub (D). Unten links ist der Kurzhub bei geöffneter Form dargestellt. Die Maschine 10 ist in Figur 1 mit geöffneter Schutztüre 6 mit Sicht auf den Formschluss (rechts im Bild) und den Einspritzzylinder 7 (links im Bild) dargestellt. Das Rohmaterial wird über Füllbehälter 15 der Maschine 10 zugeführt, über den Einspritzzylinder 7 erwärmt und unter Druck dosiert in die Kavitäten der Formen gespritzt. Die Figur 2 zeigt für die hydraulischen Komponenten die·Lösung der Figur 1. Die Figur 2 ist jedoch mit einem Wegmesssystem 64 gemäss neuer Lösung ausgerüstet. Die Figur 2 zeigt schematisch, dass auch eine hydraulisch angetriebene Maschine über die Wegfunktion steuer-/regelbar ist.

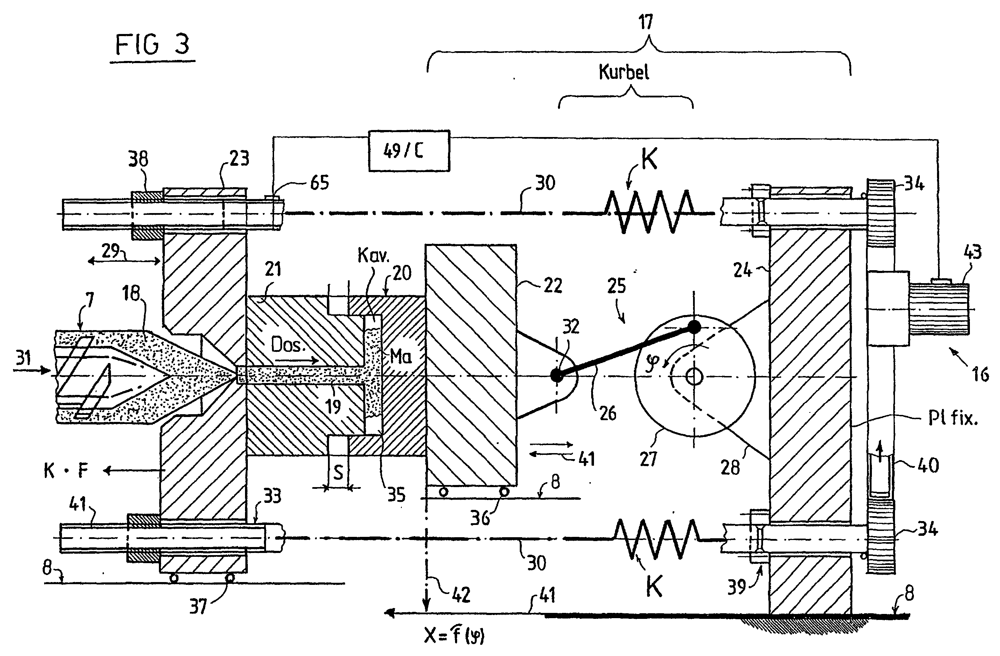

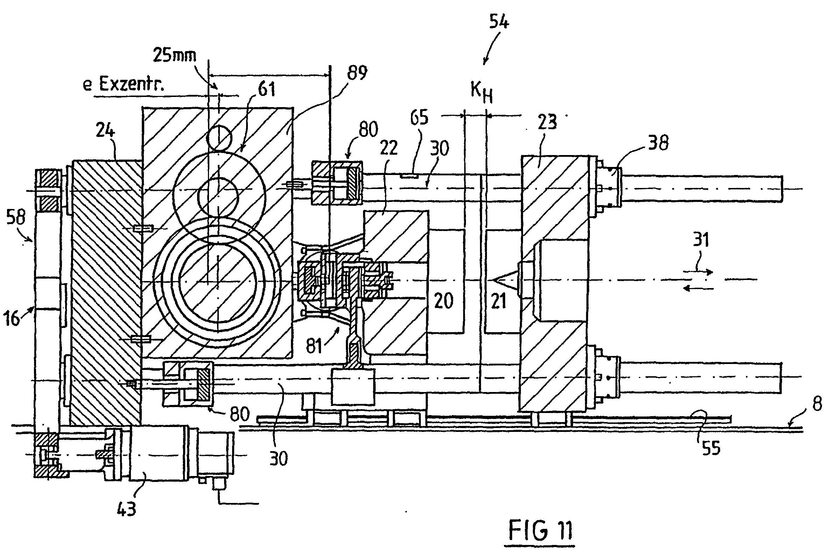

Die Figur 3 zeigt ein Beispiel der neuen Lösung. Auf der linken Bildseite der Figur 3 ist die düsenseitige Werkzeugaufspannplatte bzw. Langhubträgerplatte 23 mit einer Gegenformhälfte 21, auf die hin, gemäss Pfeilen 31, der Einspritzzylinder 7 zu- und wegbewegt wird. Die Langhubträgerplatte 23 kann je nach gewähltem Konzept fest oder beweglich an dem Maschinenständer 8 angeordnet werden, entsprechend muss die Antriebsträgerplatte fest oder beweglich angeordnet werden. Auf der rechten Bildseite befindet sich als eine bevorzugte Lösung eine kompakte Baueinheit 17 mit einem Kurbelantrieb 25. Die Baueinheit 17 besteht aus einer Antriebsträgerplatte 24 und einer beweglichen Werkzeugaufspannplatte 22, die auf einer Führung beweglich auf dem Maschinenbett 8 aufliegt, sowie einer Kurbeltragkonstruktion 28. Ein Kurbelantrieb 25 ist einerseits über einen Bolzen 32 in der beweglichen Werkzeugauf-spannplatte 22 und andererseits über einen eine Kurbel bzw. einen Exzenter in der Kurbeltragkonstruktion 28 gelenkig gelagert, derart, dass die Kurbelstange 26 entsprechend der Exzentrizität die Kurbelbewegung ausführen kann. Die Exzentrizität (e, Figur 11) entspricht der halben Hubhöhe. Auf der gegenüberliegenden Seite der beweglichen Werkzeugaufspannplatte 22 befindet sich die angetriebene Formhälfte 20. Mit den beiden Formhälften 21 sowie 20 entsteht in geschlossenem Zustand der Hohlraum 35 für die. Einlage der gewünschten scheibenförmigen Matrizen 9, 9' (Figur 2). Üblicherweise wird die CD nicht direkt in den Hohlraum 35 gegossen. In dem Hohlraum wird ein- oder beidseitig je eine Matrize 9, 9' eingelegt, welche als Negativform die Kavität für den herzustellenden flachen Datenträger aufweist. Die Verankerungs- und Haltekraft zwischen den beiden Platten wird durch Verbindungsmittel, insbesondere durch drei oder gegebenenfalls vier Säulen 30 sichergestellt. Jede Säule 30 ist auf der düsenseitigen Werkzeugaufspannplatte bzw. Langhubträgerplatte 23 über eine Mutter 38 verankert. An der Antriebsträgerplatte 24 ist ein drehbeweglicher Bund 39 befestigt, welcher über einen Zahnkranz 40 eingreift. Die feste Mutter 38 greift über ein Innengewinde auf das Gewinde 33 jeder Säule ein. Eine Drehbewegung des Zahnkranzes 40 bzw. des Zahnritzels 34 wird durch die Drehung der Säulen 30 auf die Mutter 38 und das Gewinde 33 jeder Säulen 30 in eine Linearbewegung (Pfeile 29) der düsenseitigen Werkzeugaufspannplatte bzw. Langhubträgerplatte 23 umgesetzt. Diese Bewegung stellt den Lang- oder Wartungshub dar und wird beim Matrizenschnellwechsel sowie für die Grundeinstellung und eine zyklische Korrektur derselben benötigt. Der kurze Arbeitshub wird dagegen über den Kurbelantrieb 25 sowie die bewegliche Werkzeugaufspannplatte 22 durchgeführt. Die Figur 3 zeigt ferner teilweise schematisch das Grundkonzept der neuen Lösung für die Herstellung von flachen Datenträgern wie etwa Kompaktdisks. Dargestellt ist die Lage bei dem Übergang von der Einspritzphase in die Prägephase. Im Zentrum der beiden Formhälften ist eine Kavität Kav, welche jedoch erst am Ende der Prägephase die äussere Form des Datenträgers bestimmt. Im Laufe der Entwicklung des Produktionsprozesses wurden verschiedene Konzepte verfolgt. Unveränderte Gültigkeit hat die Tatsache, dass für die höchsten Anforderungen eine Menge der Spritzmasse dosiert in die Kavität gespritzt wird, jedoch nur so viel, dass die Kavität nur teilweise gefüllt wird. Vorgängig der Füllung wird durch Bewegen der angetriebenen Formhälfte 20 an die Gegenformhälfte 21 ein vorbestimmter Kompressionsspalt gebildet. Die Menge der Spritzmasse ist mit Ma bezeichnet. Nach Abschluss der Formfüllphase bzw. des Einspritzvorganges wird der eigentliche Prägevorgang eingeleitet. Beim Beispiel, gemäss Figur 3, wird dafür die angetriebene Formhälfte 20 in Richtung der Kavität Kav. weiter bewegt und unter Aufbringen einer maximalen Prägekraft der Formhohlraum bzw. die Kavität verkleinert und die Spritzmasse verdichtet. In älteren Verfahren wurde der Kompressionsspalt bis auf Null aufgehoben. Gemäss der neuen Erfindung ist erkannt worden, dass die Werkzeuge nicht auf Anschlag gefahren werden dürfen, dass vielmehr ein Restspalt S für eine exakte Endregelung, auch nach Abschluss der Prägung, verbleiben soll. Der Anguss ist mit dem Bezugszeichen 19 versehen, der Schneckenvorraum mit dem Bezugszeichen 18. Die Figur 3 stellt ein Grundschema mit den maschinenbaulichen Kernelementen einer Maschine mit zentralem Säulenmutterantrieb 16 dar. Dabei bedeutet K die Federkonstante der Säule 30, gegebenenfalls mit Einschluss der übrigen deformierbaren Bauteile, soweit die resultierende Deformation unter einer entsprechenden Belastung die Distanz S zwischen den Werkzeugaufspannplatten 22 bzw. 23 beeinflusst. Eine Antriebsträgerplatte 24 ist mit PLfix als ortsfest bezeichnet. In diesem Baukonzept ist die Antriebsträgerplatte 24 starr bzw. fix mit dem Maschinenbett 8 bzw. Maschinenständer verbunden. Ein Kurbelantrieb 25 mit Kurbelstange 26 sowie Kurbelscheibe 27 über Kurbeltragkonstruktion 28 ist an der Antriebsträgerplatte 24 fest angebracht, so dass die entsprechende Rückhaltekraft bzw. die stossartigen Kräfte direkt auf das Maschinenbett 8 geleitet werden. Der Kurbelantrieb 25 ist ausgelegt für den Kurzhub und dient dem Aufbringen der Prägekraft.

Zwei weitere wichtige Funktionen kommen in der Figur 3 deutlich zum Ausdruck:

Einerseits ist es die Beweglichkeit der Werkzeugaufspannplatten 22 und 23, symbolisch mit Rollen 36 bzw. 37 markiert. Die Werkzeugaufspannplatte 22 bewegt sich mit der angetriebenen Formhälfte 20 für den Kurzhub, insbesondere für den ganzen Spritzgiesszyklus. Der Weg X für die angetriebene Formhälfte 20 ist eine Funktion des Drehwinkels φ der Kurbel 25 von φ ($X = f [φ]$). Die Bewegungsrichtung ist mit dem Pfeil 41 und die Wegerfassung mit dem Pfeil 42 angedeutet. Die zweite wichtige Funktion ist die Bewegbarkeit der Werkzeugaufspannplatte 23 für den Langhub über den Säulenmutterantrieb 16. Die Werkzeugaufspannplatte 23 ist für diesen Zweck verschiebbar, bildlich dargestellt auf Rollen 37 gelagert.

Beide Bewegungen für den Kurzhub und den Langhub werden bevorzugt über einen elektromotorischen Antrieb sichergestellt. Das Konzept sieht vor, dass die Antriebsträgerplatte 24 ortsfest mit dem Ständer 8 verbunden ist. Dagegen sind die beiden Formhälften 20, 21 relativ zueinander und zu dem Maschinenständer 8 verschiebbar gelagert. Die Kompressionsfunktion ($K \times F$) wird zumindest primär aufgrund der Säulendehnung (K) sowie der wirksamen Kompressionskraft (F) ermittelt. Mit dem Faktor K können alle übrigen Verformungsfaktoren, z.B. der verschiedenen Platten, miterfasst werden. Für die Grundeinstellung kann die Kompressionskraft auf verschiedenste Weise ermittelt und z.B. in erster Näherung aus dem Drehmoment des Antriebsmotores 47 abgeleitet werden. Nachteilig ist dabei, dass Reibfaktoren, genau so wie Beschleunigungskräfte das Ergebnis verfälschen. Bevorzugt werden geeignete Kraftsensoren aus dem Bereich der Formen oder aber Sensoren für die Dehnung der Säulen 30 zur Ermittlung der wirksamen Kompression bzw. der Schliesskraft zugrunde gelegt. Hier ist die Anwendung der Sensoren sehr vorteilhaft, da es sich um langsame, beinahe statische Verhältnisse handelt. Eine genaue Erfassung ist dabei sehr viel leichter als während einem hochdynamischen Prozess wie dem Prägeablauf. Die Programmsteuerung 49 wird so konzipiert, dass die Steuerung/Regelung beim Fehlen einer Kompression im Prinzip auf einer reinen Wegfunktion erfolgt, da in diesem Fall (K = 0) für die Wegfunktion der Faktor Säulendehnung gleich Null ist.

Besonders bevorzugt erfolgt der elektromotorische Antrieb über einen Servomotor und der mechanische Übertrieb über eine Kurbelantrieb 95 oder einen Exzenter 61. Dabei kann die Wegfunktion aus der Kurbel- oder Exzenterstellung (φ) abgeleitet und entsprechend der Positionserkennung aus der Regelung des Servomotores ermittelt werden. Weil das Ende der Bewegung durch die Grundeinstellung definiert ist, sind die realen Verhältnisse in den Kavitäten der Giessformen aus der Wegfunktion der beweglichen Werkzeugaufspannplatte 22 [f(φ)] sowie der Kompressionsfunktion (K x F) mit höchster Genauigkeit definiert. Die Antriebsmittel werden bevorzugt über mehrere Prägeteilschritte nach einem vorgegebenen bzw. optimierbaren Geschwindigkeitsprogramm gesteuert. Der Kurbel- bzw. Exzenterantrieb hat nicht nur den enormen Vorteil, dass bis nahe an den Totpunkt die Bewegungsfunktion aus der Umsetzung einer Kreisbewegung in eine Linearbewegung geometrisch mit höchster Genauigkeit errechenbar und ohne zusätzliche Sensoren aus der Positionsstellung des Rotors in dem Servomotor herleitbar ist. Bei einem elektromechanischen Antrieb ist deshalb eine Steuerung/Regelung auf der Basis der Wegfunktion mit hoher Genauigkeit durchführbar. Der Faktor der wirksamen Kompression mit Einschluss des Temperaturparameters, ist im Steuer- und Regelablauf berücksichtigt. Dies erlaubt, über vorgegebene Programme den ganzen Prägeablauf auf der Basis der Wegfunktion des elektromechanischen Antriebes gemäss Aufgabenstellung exakt zu kontrollieren. Anfang und Ende des Programmablaufes sind bereits in der Grundeinstellung sowie mit den entsprechenden Einstellkorrekturen (Kraftsensor 65) der Maschine gegeben. Deshalb werden für den Produktionsbetrieb innerhalb des Prägezyklusses keine weiteren Sensoren benötigt. Die neue Lösung gestattet damit, die wichtigsten Teilparameter, welche Einfluss auf die Abstandsverhältnisse haben, direkt in entsprechenden Rezepten bzw. Programmteilen zu berücksichtigen. Im Hinblick auf die Kompression sind dies zuerst alle möglichen Deformationen, mit Einschluss der Säulendehnung. Die Wegfunktion lässt die speziellen, konkreten Antriebsmittel miteinschliessen.

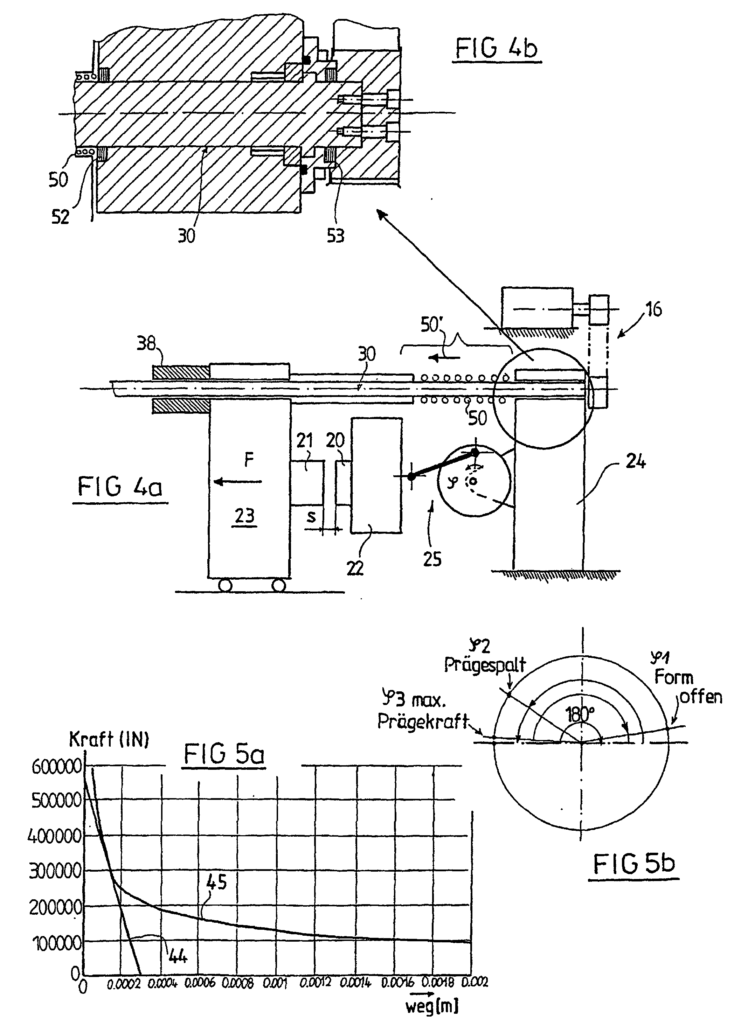

Die Figur 4a zeigt einen weiteren, sehr vorteilhaften Ausgestaltungsgedanken für die Verbesserung der Regelgenauigkeit. Für dieses Ziel wird das mechanische Spiel aller entsprechend wirksamen, mechanisch bewegbaren Teile durch eine Vorspannfeder 50 aufgehoben. Wichtig dabei ist, dass die Vorspannfeder 50 in die selbe Richtung wirkt wie der Kraftaufbau für die Prägung (Pfeil 50').

Die Figur 4b zeigt einen Schnitt durch eine Lagerstelle einer Säulenachse 56. An den beiden äusseren Seiten ist je eine Dichtung 52 bzw. 53 angebracht. Dies gestattet, im Inneren für eine reibungsarme Lagerung eine Oel- oder Fettschmierung einzuschliessen, so dass auch hier die Forderungen einer langen Lebensdauer sowie die erhöhten Ansprüche der Reinraumfabrikation erfüllt sind.

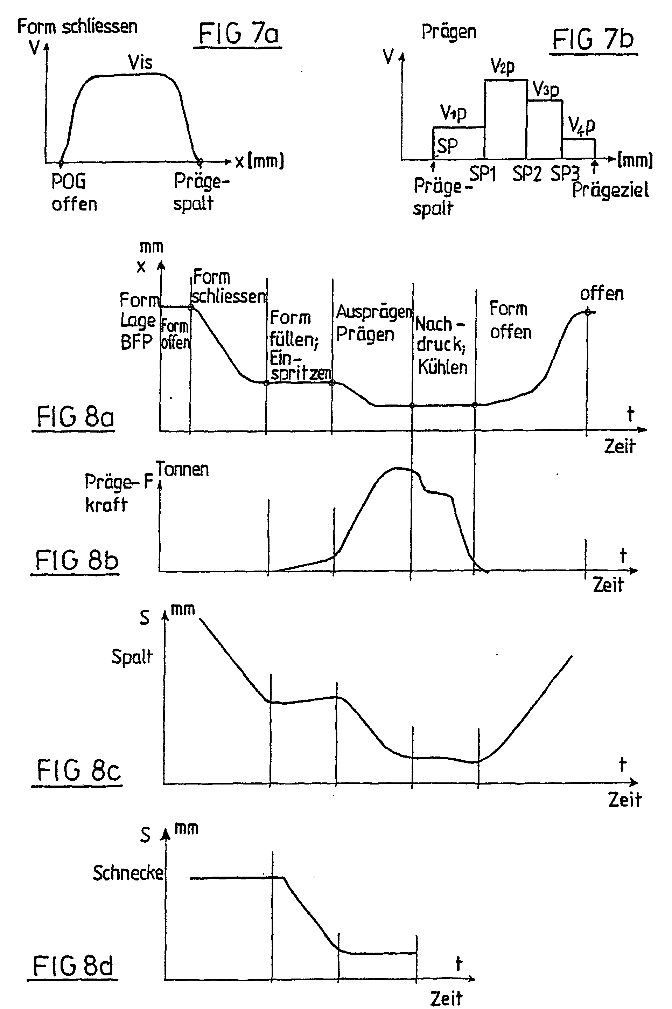

In der Figur 5a ist mit der ausgezogenen Linie 45 der theoretische Kraftverlauf am Ende der Schliessbewegung dargestellt. Die Linie 44 zeigt als Rechenbeispiel den effektiven Kraftverlauf über dem Weg auf beide Formhälften auf Grund der hook'schen Kennlinien der Verformung der Säulen sowie der Platten, bei einer CD-Schliesseinheit mit 50mm Öffnungsweg.

Das optimale Regelziel für den Kurbelantrieb liegt innerhalb von etwa 180°, wie aus der Figur 5b erkennbar ist. In der Figur 5b sind drei unterschiedliche Lagen dargestellt: Beim Drehwinkel φ1 ist die Form offen; Drehwinkel φ2 stellt den Prägespalt und φ3 die Stellung bei der maximalen Prägekraft dar. Bei der maximalen Prägekraft kann die Kurbel in der Totpunktlage, bevorzugt in Totpunktnähe, sein. F (Figur 4a) bedeutet die wirksame Kraft auf die deformierbaren Teile der Maschine, insbesondere auf die Säulen 30. Als Konsequenz aus den Relativbewegungen der beiden Formhälften 20, 21 ergibt sich eine direkte Änderung des Distanzmasses S, je nach örtlicher Lage der beiden Werkzeugaufspannplatten 22, 23. Die Werkzeugaufspannplatte 23 bewegt sich mit der Funktion K • F, die Werkzeugaufspannplatte 22 mit der Funktion X = f (φ). Für das Distanzmass S ergibt sich die folgende Funktion:

$$S = X + K \cdot F = f (\varphi) + K \cdot F$$

Für die Schliesskraftregelung wird vollinhaltlich auf die DE 36 31 164 Bezug genommen. Diese Lösung der Anmelderin zeigt ein sehr vorteilhaftes Verfahren zum Messen und Regeln der Schliesskraft einer Kunststoffspritzgiessmaschine mit zentral verstellbarem, der Schliesskrafterzeugung dienenden Kniehebelwerk. Als Lösung wird vorgeschlagen, dass wenigstens während eines Teils der Betriebszeit der Maschine die Schliesskraft für jeden Arbeitszyklus einer durch die Zahl der Zyklen vorbestimmten Betriebsperiode gemessen und aus den Messwerten ein mittlerer Wert berechnet wird. Eine Regelung erfolgt nur, wenn dieser mittlere Wert in einer Schliesskraft-Regelzone ausserhalb einer den vorgegebenen Sollwert der Schliesskraft einschliessenden Toleranzzone liegt. Die Regelung erfolgt in Schliesskraftänderungsschrrtten, wobei für jeden auf diese Änderungsschritte folgenden Arbeitszyklus eine Messung erfolgt und die nächste der Bestimmung des mittleren Wertes dienende Betriebsperiode erst wieder beginnt, wenn die Messung nach einem Schliesskraftänderungsschritt einen innerhalb der Toleranzzone liegenden Wert ergibt. Es ist ferner in vorteilhafter Weise möglich, dieses Verfahren während der ganzen Betriebszeit oder nur während der Anfahrphase oder nur während der anschliessenden, normalen Arbeitsphase (in welcher in der Maschine thermisches Gleichgewicht erreicht ist) anzuwenden. Dabei hat es sich als vorteilhaft erwiesen, die Zahl der Arbeitszyklen pro Betriebsperiode der Anfahrphase kleiner zu wählen als jene der Betriebsperioden der normalen Arbeitsphase. Damit kann meist erheblich grösseren und zeitlich schneller aufeinanderfolgenden Schliesskraftabweichungen vom Sollwert während der Anfahrphase Rechnung getragen werden.

    • Regelfehler: ΔF = Temp.einfluss

Es werden einerseits zufällige Schwankungen oder der Temperatureinfluss eliminiert und die Korrektur am Inspekt Hub als Zentral-Verstellung vorgenommen.

Die Figur 6 zeigt schematisch den zentralen Säulenmutterantrieb 16 für den Langhub mit einem Elektromotor 43 mit Antriebsritzel 46 sowie den Antrieb für den Kurzhub über einen Antriebsmotor 47, ein Getriebe 48 und den Exzenter 61. Die Einspritzeinheit mit Plastifizierzylinder ist der düsenseitigen Werkzeugaufspannplatte 23, und beide elektromotorischen Antriebe sind der anderen, festen Trägerplatte 24 zugeordnet. Der Wartungshub wird mit einer an sich bekannten "Formbauhöhenverstellung" mittels Radkranz 40 und Zahnrädern 34 an den Säulenmuttern 38 gefahren. Als Alternative kann die Drehung der Säulen 30 mit einem Zahnriemen . realisiert werden. Mit der Lagerung der Säulen 30 mit Wälzlagern in den Formplatten und mit der Schmierung der Lager und der Verstellgewinde lassen sich höhere Verstellgeschwindigkeiten und damit Umrüstungszeiten beim Wechsel der Matrize (Stamper) 9, 9' von kleiner als 30 Sekunden erreichen. Neu wird deshalb auch für diesen Antrieb ein Motor mit genau positionierbarer Achse, vorzugsweise ein Servomotor mit spielarmem Getriebe, eingesetzt. Zwischen Kurbelantrieb 25 und elektrischem Antriebsmotor 47 befindet sich ein Getriebe 89, vorzugsweise ein Stirnradgetriebe. Mit C ist eine Steuer-/Regelintelligenz mit Speicher angedeutet, welche der entsprechenden Motorsteuerung/ Regelung die jeweils erforderlichen Programmabläufe bzw. Rezepte vorgibt bzw. übergibt. Im Kasten C ist mit R1, R2, R3, usw, angedeutet, dass beliebige Rechenleistungen direkt vor Ort installiert und entsprechende Koordinationen direkt durchgeführt werden können. Sinngemäss können die Steuerverbindungen St1, St2, St3 vorgesehen und eine entsprechende Optimierung aller Steuer- und Regelabläufe sichergestellt werden.

Die Figuren 7a und 7b zeigen schematisch die Möglichkeit einer vollständigen Geschwindigkeitssteuerung/-regelung, wobei die Figur 7a das Schliessen der Form und die Figur 7b das Prägen darstellt. Der Begriff Steuerung/ Regelung entspricht dem englischen Ausdruck control, welcher beide erstgenannten einschliesst. In beiden Phasen wird ein Geschwindigkeits-profil über dem Weg verwendet. SpO, SP1, SP2, usw. sind verschiedene vorwählbare Prägespalte. Am Prägeziel verbleibt ein Spalt von z.B. 0,02 mm.

Die Figuren 8a bis 8d zeigen über der Zeit qualitativ den Verlauf der wichtigsten Parameter über der Zeit:

8a - die Lage der Form
8b - die Prägekraft
8c - den Spalt S der Form
8d - den Weg S der Schnecke

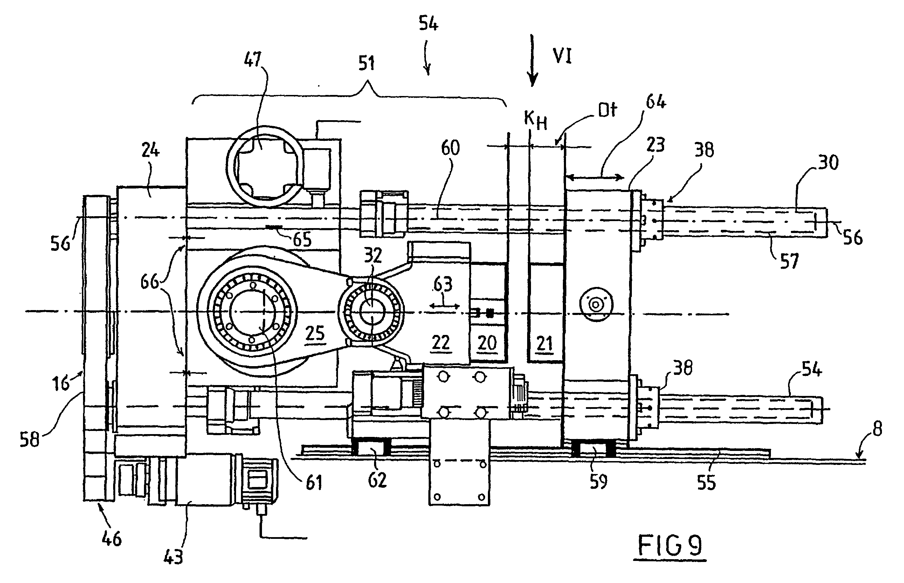

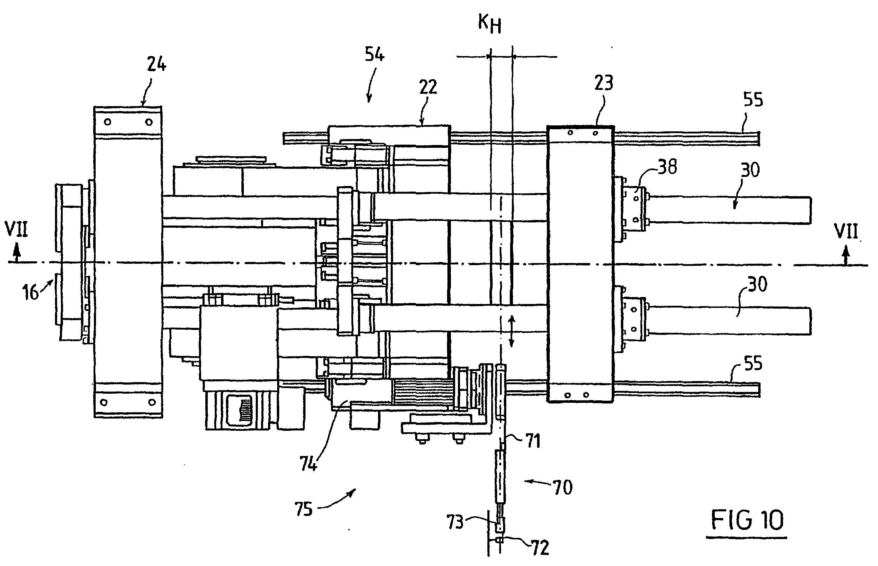

In der Folge wird auf die Figuren 9 bis 11 Bezug genommen, welche eine Ansicht von der Seite bzw. von oben sowie einen Schnitt des Formschlusses 54 darstellen. Auf der linken Bildseite ist jeweils eine Antriebsträgerplatte 24, an welcher rechts eine Baugruppe 51 für den Arbeits- bzw. Kurzhub direkt über Schrauben 66 fest verbunden ist. Auf der rechten Bildhälfte ist eine düsenseitige Werkzeugauf-spannplatte 23 angeordnet. Die düsenseitige Werkzeugaufspannplatte 23 ist einerseits über vier Säulen 30 gegenüber der Antriebsträgerplatte 24 gehalten und nach unten auf einer Führung 55 geführt. Jede der vier Säulen 30 ist über eine Säulenmutter 38 in der düsensertigen Werkzeugaufspannplatte 23 gelagert, derart, dass eine Drehbewegung der Säulenachse 56 eine Längsverschiebung der Formhälfte 21 ergibt. Damit die Säulenachse 56 mit den hochpräzisen und für möglichst grosse Reibungsarmut gut geschmierten Gewinde nicht verschmutzt wird, ist die Säulenachse 56 mit einer Schutzhülse 57 umgeben. Die Drehbewegung der Säulenachsen 56 wird über einen Zahnriemenantrieb 58 sowie einen Antriebsmotor bzw. Elektromotor 43 zentral erzeugt. Die düsenseitige Werkzeugaufspannplatte 23 ist beidseits über Gleitblöcke 59 für eine reine Linearbewegung parallel zu der Achse 60 der Säulenachsen 56 nahezu spielfrei geführt; sinngemäss ist auch die bewegliche Werkzeugaufspannplatte 22 über Gleitblöcke 62 für eine exakte Parallelführung abgestützt. Der Exzenter 61 ist frei gelagert, so dass die Kurbelbewegung des Kurbelantriebes 25 ungehindert in die Linearbewegung umsetzbar ist. Durch das Verfahren der düsenseitigen Werkzeugaufspannplatte 23 mittels entsprechendem Drehimpuls an dem Elektromotor 43 wird die Form weit, z.B. auf eine freie Öffnung von 300 mm, geöffnet. Die entsprechende Bewegung ist mit Pfeil 63 angedeutet. Sämtliche temperaturbedingte Toleranzen werden durch die Regelung der Schliesskraft korrigiert. Eine dadurch erforderliche Korrektur wird von der Steuerung selbständig erkannt (Veränderung der Schliesskraft) und die Positionskorrektur über den Elektromotor 43 durchgeführt. Der eigentliche Kurzhub KH wird allein durch die Exzenterbewegung über den Kurbelantrieb 25 und der zwangsweisen horizontalen Linearbewegung der beweglichen Werkzeugaufspannplatte 22 sichergestellt. Eine weitere zentrale Funktion in der Produktion ist die CD-Entnahme. In der Figur 10 ist ein Entnahmeroboter 70 mit Roboterarm 71, ein Saughaltekopf 72 sowie eine daran gehaltene CD 73 dargestellt. Der Entnahmeroboter 70 hat einen eigenen Elektromotor 74 und ist als Entnahmeeinheit 75 fest mit dem Maschinenbett verbunden. Wichtig ist dabei eine vollständige Koordinierung des Bewegungsablaufes zwischen Roboterarm 71 und Kurzhubbewegung (KH) für die Formöffnung. Die Koordination erfolgt im Millisekundenbereich und ist durch geeignete Sensoren gesichert, damit unter keinen Umständen eine Kollision der bewegten Teile eintritt.

Die Figur 11 zeigt einen Schnitt VII - VII der Figur 10. Wie weiter oben ausgeführt ist, wird der zentrale Säulenmutterantrieb 16 bevorzugt als Stellglied der Schliesskraftregelung, zusammen mit einem Kraftsensor 66 als Istwertgeber zur Erfassung der Schliesskraft und einer Regelvorrichtung genutzt. Dabei erfolgt die Wegerfassung der Hubbewegungen im Servomotor selbst. Die reproduzierbaren Positionen werden der Steuerung/Regelung bzw. der Koordination der verschiedenen Achsen zu Grunde gelegt. Um die erforderliche Genauigkeit nach einer Verstellung des Wartungshubes gewährleisten zu können, wird durch eine Vorspanneinrichtung 80 in jeder der angetriebenen Säulen 30 das maschinenbaulich erforderliche Lager- und Gewindespiel aufgehoben. Die erforderliche Anpressung zur Spielaufhebung kann über Federn oder pneumatisch erfolgen und bewirkt mittels einer Vorspannkraft zwischen der Antriebsträgerplatte 24 und der Langhubträgerplatte 23, dass das Spiel an der kraftschlüssigen Flanke aufgehoben wird. Mit Exzenter 61 ist als Beispiel der Exzenterradius mit 25 mm bezeichnet, was einen totalen Kurzhub von 50 mm erlauben würde. Auf die Ausstossvorrichtung 81 wird nicht näher eingegangen. Diese kann z.B. mit pneumatischer Betätigung ausgebildet sein und den Lösungen des Standes der Technik entsprechen.

**Patentansprüche**

1. Verfahren zur Steuerung/Regelung des Prägeablaufes für die Herstellung von Präzisionsteilen, insbesondere von flachen optischen Datenträgern, mit einer Spritzgiessmaschine mit zwei Formhälften, einer angetriebenen Formhälfte (20) sowie einer Gegenformhälfte (21), wobei die engetriebene Formhälfte (20) mittels eines elektromechanischen oder hydraulischen Pägeantriebes bewegt und der Kraftschluss zwischen der angetriebenen Formhälfte (20) und der Gegenformhälfte (21) bei der Grundeinstellung und dem ganzen Spritzzyklus über Verbindungsmittel der Spritzgiessmaschine hergestellt wird, welche sich in Funktion des Prägekraftverlaufes dehnen und das Spaltmass zwischen der angetriebenen Formhälfte und der Gegenformhälfte entsprechend beeinflussen,
**dadurch gekennzeichnet,**
**dass** die Steuerung/Regelung während dem Prägeablauf unter Umgehung einer laufenden Messung des Spaltmasses zwischen den beiden Formhälften, auf der Basis der Wegfunktion der angetriebenen Formhälfte programmgesteuert/geregelt erfolgt.

2. Verfahren nach Anspruch 1,
**dadurch gekennzeichnet,**
**dass** die Wegfunktion sowohl in der ersten Phase der Verkleinerung des Prägespaltes bzw. der Materialverteilung wie auch in der zweiten Phase der Erhöhung der Prägekraft gleicherweise als Profilsteuerung/-regelung zu Grunde gelegt wird.

3. Verfahren nach Anspruch 1 oder 2,
**dadurch gekennzeichnet,**
**dass** sowohl die Verkleinerung des Prägespaltes wie die Erhöhung der Prägekraft geschwindigkeitsgeregelt erfolgt.

4. Verfahren nach einem der Ansprüche 1 bis 3,
**dadurch gekennzeichnet,**
**dass** die Phase der Verkleinerung des Prägespaltes und die nachfolgende Phase der Erhöhung der Kraft mittels einer Geschwindigkeitssteuerung ineinanderfliessend durchgeführt wird.

5. Verfahren nach einem der Ansprüche 1 bis 4,
**dadurch gekennzeichnet,**
**dass** das Prägeende durch eine vorwählbare Wegposition des Prägeantriebes bzw. der angetriebenen Formhälfte (20) festgelegt wird, welche aufgrund einer voreinstellbaren Schliesskraft und einer optimalen Kraft in der Prägeendphase enspricht.

6. Verfahren nach Anspruch 5,
**dadurch gekennzeichnet,**
**dass** die Voreinstellung der Schliesskraft und die Dosiermenge gewählt wird, dass sowohl in der Prägephase wie beim anschliessenden Nachdruck alle Kräfte über die Masse des Spritzgiessteiles aufgenommen und jeder metallische Kontakt der Form- bzw. Werkzeughälften (20, 21) vermieden wird.

7. Verfahren nach einem der Ansprüche 1 bis 6,
**dadurch gekennzeichnet,**
**dass** der Nachdruckverlauf programmgesteuert/-geregelt als Profllsteuerung/Regelung der Position bzw. des Weges über der Zeitbasis, der Kraft über der Zeitbasis oder des Drehmomentes des Antriebes über der Zeitbasis erfolgt, derart, dass die Oberflächenstruktur bestmöglich erhalten und dass der wirksame Nachdruck während der Kühlphase so reduziert wird, dass der innere Spannungszustand der Spritzgiessteile und damit der Brechungsindex möglichst nicht negativ beeinflusst wird.

**8.** Verfahren nach einem der Ansprüche 1 bis 7,
**dadurch gekennzeichnet,**
**dass** die Grundeinstellung der Maschine entsprechend der maximalen Prägekraft im Prägeablauf auf an sich bekannte Weise die Grundschliesskraft sowie die optimale End- und Anfangsstellung des Prägeantriebes ohne Produkt und mit vollständig geschlossenem Werkzeug festgelegt wird.

**9.** Verfahren nach einem der Ansprüche 1 bis 8,
**dadurch gekennzeichnet,**
**dass** bei jedem Produktionszyklus der Spitzenwert der aufgetretenen Ist-Prägekraft erfasst wird, und entsprechende Längenänderungen insbesondere der Verbindungsmittelb, bedingt durch thermische Einflüsse, vorzugsweise durch einen Vergleich des Mittelwertes mehrerer Messungen mit der Sollprägekraft festgestellt und durch Korrektur der Säulenmuttereinstellung kompensiert werden.

**10.** Verfahren nach einem der Ansprüche 1 bis 8,
**dadurch gekennzeichnet,**
**dass** der Prägeantrieb elektromechanisch über einen Servomotor erfolgt, mit Positionserkennung, auf dessen Basis die Wegfunktion des elektromechanischen Antriebes errechnet wird.

**11.** Verfahren nach einem der Ansprüche 1 bis 10,
**dadurch gekennzeichnet,**
**dass** die Grundeinstellung für eine optimale Endstellung über eine Säulenmutterverstellung elektromechanisch bzw. elektromotorisch vorgenommen wird.

**12.** Verfahren nach einem der Ansprüche 1 bis 11,
**dadurch gekennzeichnet,**
**dass** die Wegerfassung für den Lang- bzw. Inspekthub vorzugsweise durch eine Wegerfassung in einem Servomotor erfolgt, wobei die in der Schliesskraftregelung ermittelte Position der Produktionsstellung in einem nachfolgenden Zyklus nach einem Inspekthub exakt anfahrbar und als reproduzierbare Position der Steuerung/Regelung bzw. der Koordination der verschiedenen Achsen der Spritzgiessmaschine zu Grunde legbar ist.

**13.** Antriebs- und Steuer-/Regeleinrichtung für die Formschlussseite (54) einer elektromechanisch und/oder hydraulisch angetriebenen Spritzgiessmaschine mit einer angetriebenen Formhälfte (20) und einer Gegenformhälfte (21) mit steuer/regelbarem Prägeablauf für die Herstellung von Präzisionsteilen insbesondere von flachen Datenträgern wobei der Kraftschluss zwischen der angetriebenen Formhälfte (20) und der Gegenformhälfte (21) über dehnbare Verbindungsmittel der Spritzgiessmaschine herstellbar ist, wobei über die Dehnbarkeit der Verbindungsmittel das Spaltmass (S) zwischen der angetriebenen Formhälfte (20) und der Gegenformhälfte (21) beeinflussbar ist,
**dadurch gekennzeichnet,**
**dass** ein Prägeantrieb sowie eine Programmsteuerung/Regelung (49) vorgesehen ist, über welche der Prägeablauf unter Umgehung einer laufenden Messung des Spaltmasses (S) zwischen den beiden Formhälften (20, 21) aufgrund der Wegfunktion der angetriebenen Formhälfte (20) regel-/steuerbar ist.

**14.** Antriebs- und Steuer-/Regeleinrichtung nach Anspruch 13,
**dadurch gekennzeichnet,**
**dass** der Prägeantrieb einen Kniehebel-, einen Zahnstangen-, einen Exzenter- oder einen Kurbelantrieb (25) aufweist, der mit der angetriebenen Formhälfte (20) verbunden ist.

**15.** Antriebs- und Steuer/Regeleinrichtung nach Anspruch 14,
**dadurch gekennzeichnet,**
**dass** eine Antriebsträgerplatte (24) fest mit dem Maschinenständer bzw. dem Maschinenbett (8) verbunden und die angetriebene Formhälfte (20) Ober den Prägeantrieb relativ zur Antriebsträgerplatte (24) bewegbar ist, derart, dass die Reaktionskräfte aus der Beschleunigung und Abbremsung der Formbewegungen die Genauigkeit der Prägestartposition nicht negativ beeinflussen.

**16.** Antriebs- und Steuer-/Regeleinrichtung nach einem der Ansprüche 13 bis 15,
**dadurch gekennzeichnet,**

**dass** der Prägeantrieb als Exzenter- oder Kurbelantrieb (25) ausgebildet ist, wobei der Exzenter- bzw. Kurbelantrieb (25) derart ausgelegt Ist, dass der Prägehub für die maximale Kompression in Totpunktnähe nutzbar ist.

**17.** Antriebs- und Steuer-/Regeleinrichtung nach einem der Ansprüche 13 bis 16,
**dadurch gekennzeichnet,**
**dass** der Prägeantrieb als Kurbel oder als Exzenter ausgebildet ist und die Wegfunktion aus der Kurbel- oder Exzenterstellung (φ) abgeleitet und entsprechend der Positionserkennung aus der Regelung des Servomotores ermittelbar ist.

**18.** Antriebs- und Steuer/Regeleinrichtung nach einem der Ansprüche 14 bis 17,
**dadurch gekennzeichnet,**
**dass** sie einen Säulenmutterantrieb (16) aufweist und eine Gegenplatte mit der Gegenformhälfte (21) gegenüber dem Maschinenständer (8) verschiebbar gelagert ist, wobei die Grundeinstellung der Maschine über den Säulenmutterantrieb (16) durchführbar ist.

**19.** Antriebs- und Steuer-/Regeleinrichtung nach Anspruch 18,
**dadurch gekennzeichnet,**
**dass** ein zentraler Säulenmutterantrieb (16) als Stellglied der Schliesskraftgrundeinstellung und der Schliesskraftregelung, zusammen mit einem Kraftsensor als Istwertgeber zur Erfassung der Schliesskraft und einer Regelvorrichtung ausgebildet ist.

**20.** Antriebs- und Steuereinrichtung nach Anspruch 13 bis 19,
**dadurch gekennzeichnet,**
**dass** das Spiel zu den bewegbaren Teilen, insbesondere des Säulenmutterantriebes (16), vorzugsweise durch mechanische oder pneumatische Federmittel wirksam durch Anpressen in Prägekraftrichtung aufgehoben wird.

**21.** Antriebs- und Steuer/Regeleinrichtung nach einem der Ansprüche 14 bis 22,
**dadurch gekennzeichnet,**
**dass** sie für den Prägeantrieb und für den Säulenmutterantrieb (16) wenigstens je einen unabhängig steuerbaren Antriebsmotor, vorzugsweise als elektrischen Servomotor ausgebildet, aufweist, wobei die Steuer-/Regelvorrichtung mit den erforderlichen Speichern für wählbare Rezepte bzw. Programme ausgebildet ist.

**Claims**

**1.** Method for controlling/regulating the embossing procedure for the production of precision parts, in particular of flat optical data carriers, comprising an injection moulding machine with two mould halves, a driven mould half (20) and a counter mould half (21), the driven mould half (20) being moved by means of an electromechanical or hydraulic embossing drive and the frictional connection between the driven mould half (20) and the counter mould half (21) being produced in the basic setting and during the entire injection cycle via connecting means of the injection moulding machine, which stretch as a function of the embossing force course and influence the gap mass between the driven mould half and the counter mould half, **characterised in that** controlling/regulating is carried out in a programme-controlled/regulated manner during the embossing procedure, while avoiding ongoing measurement of the gap mass between the two mould halves, on the basis of the path function of the driven mould half.

**2.** Method according to claim 1, **characterised in that** the path function, both in the first phase of reduction of the embossing gap or material distribution and in the second phase of increasing the embossing force, are equally used as a basis for profile control/regulation.

**3.** Method according to claim 1 or 2, **characterised in that** both the reduction in the embossing gap and the increase in the embossing force take place in a speed-regulated manner.

**4.** Method according to any of claims 1 to 3, **characterised in that** the embossing gap reduction phase and the subsequent phase of the increase in force are carried out by means of a speed controller so as to merge.

**5.** Method according to any of claims 1 to 4, **characterised in that** the embossing end is fixed by a preselectable path position of the embossing drive or of the driven mould half (20) which corresponds to a preadjustable clamping force and an optimal force in the embossing end phase.

6. Method according to claim 5, **characterised in that** the preadjustment of the clamping force and the metering amount is selected, such that all forces are absorbed by the mass of the injection moulded part both in the embossing phase and the subsequent holding pressure and any metal contact of the mould halves (20, 21) is avoided.

7. Method according to any of claims 1 to 6, **characterised in that** the holding pressure course is programme-controlled/regulated as a profile control/regulation of the position or path over the time basis, the force over the time basis or the torque of the drive over the time basis, in such a way that the surface structure is obtained in the best possible way and **in that** the effective holding pressure is reduced during the cooling phase such that the inner stress state of the injection moulded parts and therefore the refractive index is adversely affected to the least possible degree.

8. Method according to any of claims 1 to 7, **characterised in that** the basic setting of the machine is adjusted and the basic clamping force and the optimum end and starting positions of the embossing drive without product and with completely closed mould are fixed in a manner known per se in accordance with the maximum embossing force in the embossing procedure.

9. Method according to any of claims 1 to 8, **characterised in that** the peak value of the actual embossing force which occurred is detected during each production cycle and corresponding changes in length, in particular of the connecting means, caused by thermal influences are established, preferably by comparison of the mean value of a plurality of measurements with the desired embossing force, and are compensated by correction of the column nut setting.

10. Method according to any of claims 1 to 8, **characterised in that** the embossing drive is driven electromechanically via a servomotor, comprising position recognition means, on the basis of which the path function of the electromechanical drive is calculated.

11. Method according to any of claims 1 to 10, **characterised in that** the basic setting is adjusted electromechanically or by an electric motor via a column nut adjustment for an optimal end position.

12. Method according to any of claims 1 to 11, **characterised in that** the position detection for the longitudinal or inspection stroke is preferably carried out by a displacement sensor in a servomotor, wherein the position of the production position ascertained during clamping force regulation can be exactly approached in a subsequent cycle after an inspection stroke and can be used as a basis for the reproducible position of the control/regulation or coordination of the various axes of the injection moulding machine.

13. Drive and control/regulating device for the clamping mechanism-side (54) of an electromechanically and/or hydraulically driven injection moulding machine comprising a driven mould half (20) and a counter mould half (21) with controllable/regulatable embossing procedure for the production of precision parts, in particular of flat data carriers, wherein the frictional connection between the driven mould half (20) and the counter mould half (21) can be produced via stretchable connecting means of the injection moulding machine, wherein the gap mass (S) between the driven mould half (20) and the counter mould half (21) can be influenced by the stretchability of the connecting means, **characterised in that** an embossing drive and a programme controller/regulator (49) is provided via which the embossing procedure can be regulated/controlled while avoiding ongoing measurement of the gap mass (S) between the two mould halves (20, 21) owing to the path function of the driven mould half (20).

14. Drive and control/regulating device according to claim 13, **characterised in that** the embossing drive comprises a toggle lever drive, a toothed rack drive, an eccentric drive or a crank drive (25) which is connected to the driven mould half (20).

15. Drive and control/regulating device according to claim 14, **characterised in that** a drive carrier plate (24) is rigidly connected to the machine tool table or machine base (8) and the driven mould half (20) can be moved via the embossing drive relative to the drive carrier plate (24) in such a way that the reaction forces from the acceleration and deceleration of the mould movements do not adversely affect the accuracy of the embossing start position.

16. Drive and control/regulating device according to any of claims 13 to 15, **characterised in that** the embossing drive is constructed as an eccentric or crank drive (25), the eccentric or crank drive (25) being designed in such a way that the embossing stroke can be used for maximum compression in the vicinity of the dead centre.

**17.** Drive and control/regulating device according to any of claims 13 to 16, **characterised in that** the embossing drive is constructed as a crank or as a eccentric and the path function is derived from the crank or eccentric position ($\varphi$) and can be ascertained from the regulation of the servomotor in accordance with the position detection.

**18.** Drive and control/regulating device according to any of claims 14 to 17, **characterised in that** it comprises a column nut drive (16) and a counter plate with the counter mould half (21) is displaceably mounted with respect to the machine tool table (8), wherein the basic setting of the machine can be adjusted via the column nut drive (16).

**19.** Drive and control/regulating device according to claim 18, **characterised in that** a central column nut drive (16) is constructed as an actuator of the clamping force basic setting and of the clamping force regulation, together with a force sensor as actual value sensor for detecting the clamping force, and a regulating device.

**20.** Drive and control device according to claim 13 to 19, **characterised in that** the play relative to the movable parts, in particular of the column nut drive (16), is preferably effectively eliminated by mechanical or pneumatic spring means by pressing in the direction of the embossing force.

**21.** Drive and control/regulating device according to any of claims 14 to 22, **characterised in that** it comprises at least one respective independently controllable drive motor, preferably constructed as an electric servomotor, for the embossing drive and for the column nut drive (16), the control/regulating device being constructed with the required memories for selectable formulations or programmes.

**Revendications**

**1.** Procédé de commande et réglage du processus de pressage pour la fabrication de pièces de précision, en particulier des supports de données optiques plats, au moyen d'une presse d'injection comprenant deux moitiés de moule, une moitié de moule mobile (20) et une moitié de moule complémentaire (21), la moitié de moule mobile (20) étant entraînée par un système d'entraînement mécanique ou hydraulique de l'outil de pressage et l'entraînement par adhérence entre la moitié de moule mobile (20) et la moitié de moule complémentaire (21) étant réalisé au moment du réglage de base et pendant l'ensemble du cycle d'injection par l'intermédiaire de moyens d'assemblage de la presse d'injection, lesquels sont extensibles en fonction du gradient de la force de pressage et influencent de manière correspondante la dimension de la fente entre la moitié de moule mobile et la moitié de moule complémentaire, **caractérisé en ce que** le processus de commande et réglage est effectué pendant le processus de pressage, en évitant une mesure continue de la dimension de la fente entre les deux moitiés de moule, à l'appui d'un programme basé sur la fonction de déplacement de la moitié de moule mobile.

**2.** Procédé selon la revendication 1, **caractérisé en ce que** la fonction de déplacement est prise comme base de la commandé et réglage du profil autant au cours de la première phase de réduction de la fente de pressage ou de répartition de la matière qu'au cours de la deuxième phase de l'augmentation de la force de pressage.

**3.** Procédé selon la revendication 1 ou 2, **caractérisé en ce que** la diminution de la fente de pressage, de même que l'augmentation de la force de pressage sont régulées en fonction de la vitesse.

**4.** Procédé selon l'une quelconque des revendications 1 à 3, **caractérisé en ce que** la phase de diminution de la fente de pressage et la phase consécutive de l'augmentation de la force de pressage sont effectuées de manière enchaînée au moyen d'un réglage de la vitesse.

**5.** Procédé selon l'une quelconque des revendications 1 à 4, **caractérisé en ce que** la fin du pressage est définie par une position prédéfinissable du déplacement du mécanisme d'entraînement de l'outil de pressage ou de la moitié de moule mobile (20), qui correspond à une force de fermeture pré-réglable et une force optimale dans la phase de la fin du pressage.

**6.** Procédé selon la revendication 5, **caractérisé en ce que** le préréglage de la force de fermeture et la quantité dosée sont choisis de telle sorte que, non seulement dans la phase de pressage, mais aussi dans la phase consécutive de l'application de la pression supplémentaire, toutes les forces sont absorbées par la masse de la pièce moulée par injection et tout contact métallique entre les moitiés de moule (20, 21) est évité.

**7.** Procédé selon l'une quelconque des revendications 1 à 6, **caractérisé en ce que** le processus d'application de la pression supplémentaire est effectué à l'appui d'un programme de commande et réglage sous forme de commande et réglage du profil de la position ou du déplacement en fonction du temps, de la force en fonction du temps ou du couple de rotation du mécanisme d'entraînement en fonction du temps, de telle sorte que la structure de la surface est obtenue de la meilleure manière possible et que l'application de la pression supplémentaire active pendant la phase de refroidissement est réduite de telle sorte que l'état de tension interne des pièces moulées par injection et, de ce fait, l'indice de réfraction ne sont autant que possible pas influencés négativement.

8. Procédé selon l'une quelconque des revendications 1 à 7, **caractérisé en ce que** le réglage de base de la presse d'injection en fonction de la force de pressage maximum pendant le processus de pressage est défini d'une manière connue en soi à l'appui de la force de fermeture de base, ainsi que de la position optimale de début et de fin du mécanisme d'entraînement de l'outil de pressage sans produit et avec un moule complètement fermé.

9. Procédé selon l'une quelconque des revendications 1 à 8, **caractérisé en ce que**, à chaque cycle de fabrication, la valeur maximale de la force de pressage réelle générée est enregistrée, des variations de longueur correspondantes des moyens d'assemblage, dues aux influences thermiques, sont détectées de préférence par une comparaison entre la valeur moyenne de plusieurs mesures et la force de pressage théorique et ces variations sont compensées par des mesures correctives au niveau d'un réglage par manchon fileté.

10. Procédé selon l'une quelconque des revendications 1 à 8/ **caractérisé en ce que** le mécanisme d'entraînement de l'outil de pressage est actionné par voie électromécanique par l'intermédiaire d'un servomoteur avec une détection de la position basée sur la fonction de déplacement de l'entraînement électromécanique.

11. Procédé selon l'une quelconque des revendications 1 à 10, **caractérisé en ce que** le réglage de base pour une position finale optimale est effectué par voie électromécanique ou électromotrice par l'intermédiaire d'un réglage par manchon fileté.

12. Procédé selon l'une quelconque des revendications 1 à 11, **caractérisé en ce que** le déplacement pour la course longue ou course de contrôle est mesuré de préférence par une détection du déplacement dans un servomoteur, moyennant quoi la position de la phase de fabrication, déterminée dans le réglage de la force de fermeture, peut être à nouveau approchée avec précision dans un cycle suivant une course de contrôle et, en tant que position reproductible, est prise comme base du processus de commande et réglage ou de la coordination entre les différents arbres de la presse d'injection.

13. Dispositif d'entraînement et de commande et réglage pour le côté d'entraînement par conjugaison de forme d'une presse d'injection actionnée par voie électromécanique et/ou hydraulique, comprenant une moitié de moule mobile (20) et une moitié de moule complémentaire (21) avec un processus de pressage pouvant être commandé et réglé pour la fabrication de pièces de précision, en particulier des supports de données plats, l'entraînement par adhérence entre la moitié de moule mobile (20) et la moitié de moule complémentaire (21) pouvant être réalisé par des moyens d'assemblage extensibles de la presse d'injection, l'extensibilité des moyens d'assemblage pouvant influencer la dimension de la fente (S) entre la moitié de moule mobile (20) et la moitié de moule complémentaire (21), **caractérisé en ce qu'**il est prévu un entraînement de l'outil de pressage, ainsi qu'un dispositif de commande et réglage par programme (49), par lequel le processus de pressage peut être commandé et réglé en évitant une mesure continue de la dimension de la fente (S) entre les deux moitiés de moule (20, 21), à l'appui d'un programme basé sur la fonction de déplacement de la moitié de moule mobile (20).

14. Dispositif d'entraînement et de commande et réglage selon la revendication 13, **caractérisé en ce que** le mécanisme d'entraînement de l'outil de pressage comporte un entraînement avec levier à genouillère, un entraînement à crémaillère, un entraînement à excentrique ou un entraînement à bielle et manivelle (25), lequel est assemblé avec la moitié de moule mobile (20).

15. Dispositif d'entraînement et de commande et réglage selon la revendication 14, **caractérisé en ce qu'**une plaque de support motrice (24) est assemblée fermement avec le socle ou le bâti (8) de la presse d'injection et la moitié de moule mobile (20) est logée de manière mobile par rapport à la plaque de support motrice (24) au moyen du mécanisme d'entraînement de l'outil de pressage, de telle sorte que les forces de réaction issues de l'accélération et du ralentissement des mouvements du moule n'influencent pas négativement la précision de la position de départ du pressage.

16. Dispositif d'entraînement et de commande et réglage selon l'une quelconque dès revendications 13 à 15, **carac-**

**térisé en ce que** l'entraînement de l'outil de pressage est conçu sous forme d'entraînement à excentrique ou d'entraînement à bielle et manivelle (25), l'entraînement à excentrique ou l'entraînement à bielle et manivelle (25) étant réalisés de telle sorte que la course de pressage pour la compression maximale est active à proximité du point mort.

17. Dispositif d'entraînement et de commande et réglage selon l'une quelconque des revendications 13 à 16, **caractérisé en ce que** l'entraînement de l'outil de pressage est conçu sous forme de manivelle ou d'excentrique, et la fonction de déplacement est dérivée de la position de la manivelle ou de l'excentrique (φ) et peut être calculée en fonction de la détection de la position à l'appui du réglage du servomoteur.

18. Dispositif d'entraînement et de commande et réglage selon l'une quelconque des revendications 14 à 17, **caractérisé en ce que** ledit dispositif comporte un entraînement par manchon fileté (16) et un plateau porte-moule complémentaire, muni de la moitié de moule complémentaire (21), est logé de manière mobile par rapport au bâti (8) de la presse d'injection, le réglage de base de la presse d'injection pouvant être effectué par l'intermédiaire de l'entraînement par manchon fileté (16).

19. Dispositif d'entraînement et de commande et réglage selon la revendication 18, **caractérisé en ce que** l'entraînement centralisé par manchon fileté (16), conjointement avec un capteur de force, conçu sous forme de capteur de valeur réelle destiné à déterminer la force de fermeture, et avec un dispositif de réglage, est conçu pour former un organe de réglage pour le réglage de base de la force de fermeture et le réglage de la force de fermeture.

20. Dispositif d'entraînement et de commande et réglage selon l'une quelconque des revendications 13 à 19, **caractérisé en ce que** le jeu entre les pièces mobiles, en particulier de l'entraînement par manchon fileté (16), est supprimé efficacement par une poussée dans la direction de la force de pressage exercée de préférence par l'intermédiaire de moyens de ressort mécaniques ou pneumatiques.

21. Dispositif d'entraînement et de commande et réglage selon l'une quelconque des revendications 14 à 20, **caractérisé en ce que** ledit dispositif, pour l'entraînement de l'outil de pressage et pour l'entraînement par manchon fileté (16), comporte au moins pour chacun un moteur de commande pouvant être commandé de manière autonome, conçu de préférence sous forme de servomoteur, le dispositif de commande et réglage étant réalisé avec les mémoires nécessaires pour les formules et programmes à sélectionner.

FIG 1

FIG 2

FIG 6

FIG 3

FIG 4b

50
52
30
53

16

50'

38
30
50
24

F
21 20
23 s 22 25

FIG 4a

φ2
Prägespalt
φ1
Form
offen
φ3 max.
Prägekraft
180°

FIG 5b

Kraft (IN)    FIG 5a

600000
500000
400000
300000    45
200000
100000    44
0
0  0.0002 0.0004 0.0006 0.0008 0.001 0.0012 0.0014 0.0016 0.0018 0.002
weg(m)

FIG 7a

FIG 7b

FIG 8a

FIG 8b

FIG 8c

FIG 8d

FIG 9

FIG 10

FIG 11